# EUROPEAN PATENT APPLICATION

(11) **EP 3 968 044 A1**
(43) Date of publication of application: **16.03.2022**
(21) Application number: 20171879.8
(22) Date of filing: 28.04.2020
(51) Int. Cl.: G01S 7/40, G01S 13/931

(54) **RADAR TRANSCEIVER TEST METHOD AND SYSTEM**

(71) Applicant: Veoneer Sweden AB, 447 37 Vårgårda (SE)
(72) Inventor: MOSS, Jonathan, 85716 Unterschleissheim (DE); GERBER, Patrick, 97464 Niederwerrn (DE); POIGER, Walter, 97464 Niederwerrn (DE); FUCHS, Martin, 85716 Unterschleissheim (DE)
(74) Representative: Westpatent AB

(57) **Abstract**

The present disclosure relates to method for controlling the function of a vehicle radar transceiver (3), where the method comprises transmitting (S100) a radar signal (5) and collecting and storing (S300) target data comprising a received detected signal level obtained from the reflected radar signals (6) that have been reflected by at least one target object (7) during a measurement angular interval (21). The method further comprises determining (S400) that the radar transceiver (3) is functioning properly when at least one of the following conditions is met:
- the detected signal level exceeds a minimum signal level (12) during an angular interval (θᵢ) comprised in a measurement angular interval (21); and
- a detected signal level change for a certain angular change falls below a certain limit during an angular interval (θᵢ) comprised in the measurement angular interval (21).

## Description

### DESCRIPTION OF THE DISCLOSURE

The present disclosure relates to methods and measuring systems for testing radar transceivers adapted for automotive applications, in particular for testing radar transceivers mounted within or behind a bumper.

A radar transceiver is, normally, a device arranged for transmission and reception of radar signals in a dedicated radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

Radar transceivers are positioned at various positions, some are positioned behind a vehicle bumper that serves as a secondary radome. For these, there can be a need to be able to evaluate for potential blockage. Typical cases for blockage are blockage by an object such as snow or other deposit on the bumper while the vehicle is parked, and when the bumper in front of the radar transceiver needs to be repaired and new paint has to be applied.

In the latter case, it is difficult to control the paint characteristics of the re-painted bumper. The paint has to be matched to the rest of the paint and thus a mix of various elements is often needed to achieve the same color.

The characteristics of the new paint may differ from the characteristics of the original paint, and how the paint is applied can both affect the original radar transceiver performance in term of detection range and azimuth angle estimation accuracy. Excess paint will result in reduced range of radar, sometimes in the form of narrow notches caused by cancellation of the signal from the reflections between the radar and fascia.

There is thus a need to check if, and to which degree, the new paint affects the range and azimuth angle estimation performance. However, driving the vehicle at the repair shop is not always possible.

There also exist static methods, for example measurement of the thickness using ultrasonic probe. A problem with this approach is that the performance does not only depend on the thickness, but also on the painted material. Depending on the radar transceiver, it is not always possible to define a pass/fail criteria.

Another example of a static method is measurement of a radiated wave using receiver equipment. This is relatively precise, but requires appropriate equipment to be able to measure an RF signal. Such equipment is expensive and cannot be deployed in all service shops.

There is thus a need for further improvements, in particular to control if and to which degree radar transceiver characteristics have changed for a re-painted bumper. Such a control should be possible to perform without moving the vehicle, and by using low-cost equipment. Generally, there is a need for improved testing of the functionality of radar transceivers, in particular after a known change has been made to the transceiver itself or its surroundings, such as for example the mentioned re-painting.

### SUMMARY

It is an object of the present disclosure to provide a method and a measuring system for controlling if, and to which extent, radar transceiver characteristics have changed. This can be performed after a known change has been made to the transceiver itself or its surroundings, such as for example if a bumper covering the radar transceiver has been re-painted. Such a control should be possible to perform without moving the vehicle, and by using low-cost equipment.

This object is obtained by method for controlling the function of a vehicle radar transceiver. The method comprises transmitting a radar signal and collecting and storing target data comprising a received detected signal level obtained from the reflected radar signals that have been reflected by at least one target object during the measurement angular interval. The method further comprises determining that the radar transceiver is functioning properly when at least one of the following conditions is met:
- The detected signal level exceeds a minimum signal level during an angular interval comprised in a measurement angular interval.
- A detected signal level change for a certain angular change falls below a certain limit during an angular interval comprised in the measurement angular interval.

In this way, it can easily be checked if, and to which extent, radar transceiver characteristics have changed, in particular after a known change has been made to the transceiver itself or its surroundings, such as for example the mentioned re-painting.

According to some aspects, the method comprises moving the target object along a measurement arc at a distance from the radar transceiver during the measurement angular interval.

This provides a coherent coverage with data from a multitude of angles within the measurement angular interval.

According to some aspects, a wire is used for maintaining the distance.

In this way, the distance is maintained in an uncomplicated and reliable manner.

According to some aspects, the method comprises monitoring an azimuth angle of the target object over time as the target object is moved around the measurement arc, and comparing the monitored azimuth angle to an expected azimuth angle trajectory.

In this way, it can be determined whether the radar transceiver is functioning properly or not in an uncomplicated and reliable manner.

According to some aspects, there are two or more target objects in one or more corresponding fixed positions.

This would lead to a loss of information in between the fixed targets if there is not a movable target object, but dispenses with having to move a target object.

According to some aspects, a metal pipe or metal rod is used as target object.

This means that uncomplicated structures can be used as target objects.

According to some aspects, the target object is cylindrical and vertically arranged on a wheeled carriage.

According to some aspects, the minimum signal level varies as a function of azimuth angle.

There are also disclosed herein measuring systems associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described in more detail with reference to the appended drawings, where
Figure 1 schematically shows a top view of a vehicle;
Figure 2 schematically shows first plots of detected amplitude versus azimuth angle;
Figure 3 schematically shows second plots of detected amplitude versus azimuth angle; and
Figure 4 is a flow chart illustrating methods.

### DETAILED DESCRIPTION

Aspects of the present disclosure will now be described more fully with reference to the accompanying drawings. The different devices and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the disclosure. As used herein, the singular forms "a", "an" and "the" are intended to include the plural forms as well, unless the context clearly indicates otherwise.

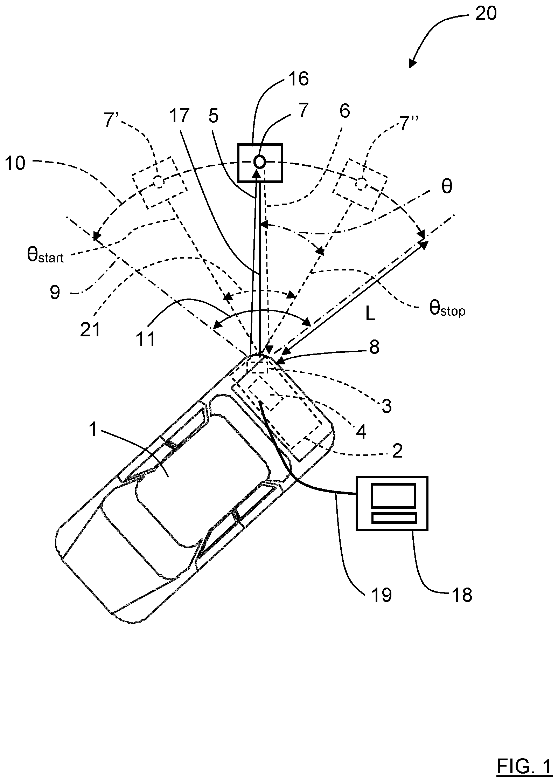

Figure 1 shows a top view of a vehicle 1 that comprises a radar system 2 that in turn comprises a radar transceiver 3 and a control unit 4. The radar transceiver 3 has a certain field of view (FOV) 9.

The radar transceiver 3 is adapted to transmit radar signals 5 and receive reflected radar signals 6 that have been reflected by an object 7. The control unit 4 controls the radar transceiver 3, for example transmission timing, transmission frequency content, as well as the actual transmitted time waveform. The control unit 4 is also adapted to perform signal processing in order to extract target data related to the detected objects, for example 2D FFT for obtaining a Range-Doppler matrix in a previously well-known manner.

The radar transceiver 3 is positioned behind or inside a bumper 8 which serves as a radome for the radar transceiver 3.

According to the present disclosure, the control unit 4 is adapted to control the radar transceiver 3 to transmit a radar signal 5 and to collect target data comprising received and detected amplitude level obtained from the reflected radar signals 6 that have been reflected by a target object 7 that is moved at a fixed radial distance L within the FOV 9. The target object 7, 7', 7'' is thus moved along a measurement arc 10 between radar transceiver azimuth angles θ, from a start angle θₛₜₐᵣₜ to a stop angle θₛₜₒₚ, such that an azimuth measurement angular interval 21 is covered, for example -60° to +60°. The measurement angular interval 21 should be within the FOV's angular span 11. In Figure 1, a the measurement angular interval 21 is shown to fall below the FOV's angular span 11, but could of course be more or less equal to the FOV's angular span 11.

The collected target data are at least partially stored, either at the control unit 4 itself or at an external computer device 18 such as a laptop that is connected to the control unit 4 via a Controller Area Network (CAN) bus 19.

The skilled person will appreciate that according to some aspects, as an addition to, or instead of, detected amplitude level, the target data comprises a signal to noise (SNR) ratio of the received reflected radar signals 6. Just like any radio receiver, the radar system 2 can estimate its own noise floor, for example in dB. This would normally be relatively constant over time and, independent of the target object azimuth angle θ. The SNR would be the ratio of the target amplitude to this noise level. A benefit of using SNR is that as the temperature of the radar transceiver 3 changes, the gain/signal amplification stages of the radar transceiver 3 change, whereas the SNR is more constant. Hence SNR is less dependent on temperature and varies less from radar to radar. Throughout this disclosure, SNR and amplitude can be used interchangeably.

The term signal level generally refers to amplitude level or SNR level. In the examples provided, an amplitude level is discussed as signal level, but the examples as of course applicable for an SNR level just as well.

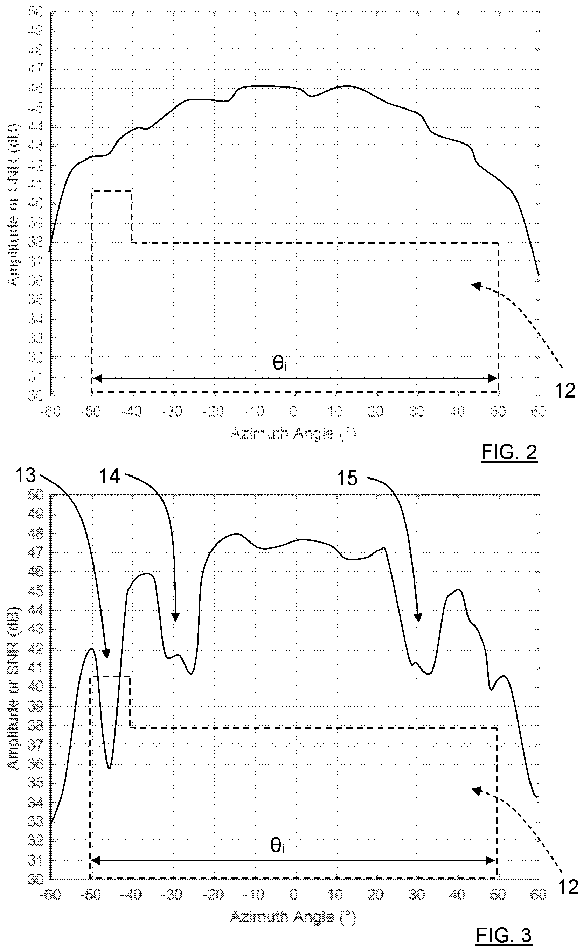

Figure 2 shows detected amplitude level versus azimuth angle for an angular interval between -60° and +60° for a number of passes of the target object 7 from the start angle θₛₜₐᵣₜ = -60° to the stop angle θₛₜₒₚ +60°. By analysis of the detected amplitude level versus azimuth angle it can be determined whether the radar transceiver 3 is functioning properly, and thus if new bumper paint or other changes affect the working of the radar transceiver 3. The analysis is according to some aspects performed at the computer device 18.

Figure 2, and the following Figure 3, show the amplitude level in dB of the signal returned from the target as measured by the radar transceiver 3. The skilled person will appreciate that this could equally be a signal to noise (SNR) ratio of the target as discussed above. This is indicated in Figure 2 and Figure 3, where the Y-axis is marked "Amplitude or SNR".

According to some aspects, the target object 7 selected should ideally exhibit the same radar cross section (RCS) as it is moved around the measurement arc 10 and the radar transceiver 3 be able to distinguish the target object 7 by knowing a priori the arc's radius L. There are also benefits in using a target object which has a consistent RCS along range of heights since not all radar transceivers are installed at the same height in a vehicle.

As shown in Figure 2, the detected amplitude level should exceed a certain minimum amplitude level 12 that is indicated with dashed lines, constituting an amplitude mask. This means that the detected amplitude does not suffer from an unacceptable attenuation. According to some aspects, the minimum amplitude level 12 is not constant over azimuth angle θ, but can be a function varies as a function of azimuth angle θ. In the examples in Figure 2 and Figure 2, there is one minimum amplitude level at approximately -52dB between the azimuth angles -50° and -40°, another minimum amplitude level at -49dB between the azimuth angles -40° and +50°. This is of course only an illustration of one possibility for reasons of explaining the present disclosure.

Furthermore, according to some aspects, the detected amplitude level should follow a continuous trace where the detected amplitude level change for a certain angular change should be within a certain limit, according to some aspects within a certain angular span.

As long as the above conditions are met, the radar transceiver 3 is determined to function properly, new bumper paint or other changes not affecting the working of the radar transceiver 3 to such a degree that an action is required. According to some aspects, this is the case for the plots in Figure 2. Here, the detected amplitude level change for a certain angular change increases over +50° and below -50°, and according to some aspects the detected amplitude level change for a certain angular change is only considered for a certain angular interval θᵢ, such as for example within the span -50° to +50°. Outside that angular interval θᵢ, the amplitude level drops relatively quickly, and this is a normal behavior.

Corresponding plots are shown for another situation in Figure 3.

Making the assumption that the movement of the target object 7 during measurement is continuous and fairly constant, the measuring system 20 can check if there are any jumps in the angle estimation. If, by observing the target object 7 over time, it is determined that it started at a start angle θₛₜₐᵣₜ and is moving at a fairly constant speed to a stop angle θₛₜₒₚ, the the measuring system 20 should report that consistently during that time. According to some aspects, a linear curve fit can be performed, and for example a ±6° deviation be accepted.

According to some aspects, in this case, the radar transceiver 3 is not determined to function properly since the detected amplitude level falls below the minimum amplitude level 12 between approximately -49° to -42°. There are furthermore several amplitude level nothes or dips 13, 14, 15 that could correspond to irregular paint characteristics of a new paint layer. At these dips 13, 14, 15, the detected amplitude level does not follow a continuous trace and the detected amplitude level change for a certain angular change falls outside a predefined limit for certain angular intervals where the detected amplitude changes abruptly.

In the example with reference to Figure 3, there are thus examples provided of two different problems, both a too low detected amplitude level and abrupt change of detected amplitude level such that dips 13, 14, 15 are present for the detected amplitude level.

According to some aspects, the target object 7 is constituted by a metal rod or pipe, in the following a metal pipe is considered, where the pipe can be circular or rectangular. According to some aspects, the pipe is vertically mounted and has diameter of 20-40mm. The vertical mounting of the radar transceiver is within a certain range, for example ±1°, ±2° or ±3°. According to some aspects, the pipe is mounted to a wheeled carriage 16 that is connected to a wire 17, where the wire 17 is attached to the vehicle or any other object such that the radial distance L between the target object 7 and the radar transceiver 3 is maintained during movement of the carriage 16 with the target object 7.

The target object can be in the form of a corner reflector. A corner reflector would normally be mounted at approximately the same height as radar antenna comprised in the radar transceiver 3, and does not need to be pointing directly at the radar.

For a metal pipe, the height is not important as long as the pipe passes a FOV of the radar antenna.

The test setup according to the above is possible to use in normal workshop, and only require a small radius around the radar sensor, e.g. about 1m.

The present disclosure can be applied to any suitable radar transceiver or radar transceivers comprised in the radar system 2. In Figure 1 only a rear corner radar transceiver 3 is shown, this is only by way of example. Normally, there are several radar transceivers in a radar system 2 of this kind, and the present disclosure can be applied to some of these radar transceivers, or all the radar transceivers in the radar system.

A non-limiting example of how a test may be performed is provided in the following.
1) A test operator sets up a wheeled carriage 16 such as a small trolley with a vertically extending aluminum pipe of at least 1 meter length as target object 7.
2) A wire 17 is attached to an anchor point under the bumper 8, where the wire length 22, constituting a radius, is set to about 100cm.
3) As an option, an external computer device 18 such as a personal computer (PC) may read the internal temperature of the radar transceiver 3 via CAN. This can be used to allow for temperature variation of the radar transceiver 3, since a relatively cold radar transceiver 3 typically will measure a higher SNR than a relatively warm radar transceiver 3. This process may be built into the control unit 4.
4) As an option, the PC 18 is adapted to configure the radar transceiver 3 into a measuring mode with a min/max radius which allows the control unit 4 to determine which radar detections correspond to the target object 7, and which radar detections correspond to the nearby buildings or the test operator.
5) The test operator stands behind the target object 7 and moves the trolley 16 around the FOV in, e.g. 15 seconds.
6) The PC 18 logs azimuth and detected amplitude level via the CAN bus 19 and provides audible feedback to the engineer regarding for example:
   - Target object 7 detected within FOV.
   - Target object 7 reached one azimuth angle extreme θₛₜₐᵣₜ, θₛₜₒₚ. Test started and progressing OK.
   - End extreme reached. Test completed successfully.
7) The detected amplitude level is cross-checked against an amplitude mask 12 by the PC 18. A pass or fail verdict for the functionality of the radar transceiver 3 is provided, and a hard copy of the test results is provided via a printer.

According to some aspects, an azimuth angle estimate of the target object 7 as reported by the radar system 2 may also be monitored and checked on the assumption that the target object 7 starts at -60° and finishes at +60°, and that the azimuth angle θ increases linearly over time and always maintains a positive gradient.

The above in merely an example, and should not be regarded as limiting in any way. The cross-checking can of course also, or as an alternative, be directed towards finding amplitude dips as discussed above.

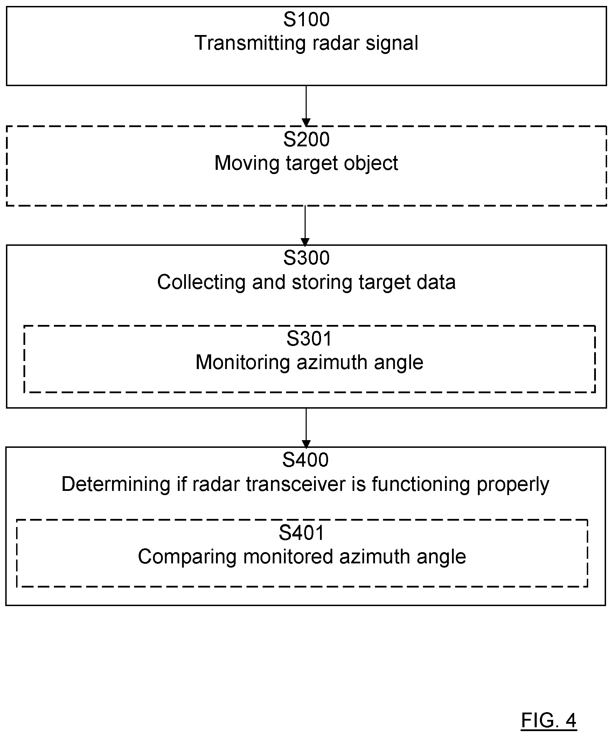

With reference to Figure 4, the present disclosure relates to a method for controlling the function of a vehicle radar transceiver 3. The method comprises transmitting S100 a radar signal 5 and collecting and storing S300 target data comprising a received detected signal level obtained from the reflected radar signals 6 that have been reflected by at least one target object 7 during a measurement angular interval 21. The method further comprises determining S400 that the radar transceiver 3 is functioning properly when at least one of the following conditions is met:
- The detected signal level exceeds a minimum signal level 12 during an angular interval θᵢ comprised in a measurement angular interval 21.
- A detected signal level change for a certain angular change falls below a certain limit during an angular interval θᵢ comprised in the measurement angular interval 21.

According to some aspects, the method comprises moving S200 the target object 7 along a measurement arc 10 at a distance L from the radar transceiver 3 during the measurement angular interval 21.

According to some aspects, a wire 17 is used for maintaining the distance L.

According to some aspects, the method comprises monitoring S301 an azimuth angle θ of the target object 7 over time as the target object is moved around the measurement arc 10, and comparing S401 the monitored azimuth angle θ to an expected azimuth angle trajectory.

According to some aspects, there are two or more target objects 7 in one or more corresponding fixed positions.

According to some aspects, a metal pipe or metal rod is used as target object 7.

According to some aspects, the target object 7 is cylindrical and vertically arranged on a wheeled carriage 16.

According to some aspects, the minimum signal level 12 varies as a function of azimuth angle.

The present disclosure is not limited to the examples discussed, but may vary freely within the scope of the appended claims. For example, the radar transceivers can be of any suitable kind, and can according to some aspects comprise suitable devices such as antennas, transmitters, receivers, control units etc.

The present disclosure relates to a measuring system 20 for controlling the function of a vehicle radar transceiver 3, where the measuring system 20 comprising a radar system 2 that in turn comprises the radar transceiver 3 and a control unit 4. The measuring system 20 further comprising a movable target object 7, and, according to some aspects, also an external computer device 18 that is connected to the control unit 4. According to some aspects, the computer device 18 is adapted to perform an analysis for determining whether at least one of said following conditions is met. According to other aspects, the external computer is not required and all configuration and post-process is performed within the radar control unit 4.

The control unit 4 may be constituted by one unit or by two or more distributed sub-units. Functions of the measuring system according to the present disclosure can be shared in different ways between the control unit 4 of the radar system 2 and the external computer device 18.

Instead of a wheeled carriage, other alternatives are of course conceivable. For example the target object 7 can be moved along a track, which, however, requires a more permanent installation. Such a track could admit an automatic movement of the target device during measurement, where the azimuth angle θ could be acquired via the position on the track.

According to some aspects, the measurement arc 10 is configured such that the distance L is not fixed but varies for different azimuth angles θ.

According to some aspects, there are two or more target objects 7 in one or more corresponding fixed positions. These fixed targets are not moved along the arc 10, and are positioned at slightly different ranges enabling a number of spot checks. This would lead to a loss of information in between the fixed targets if there is not a movable target object, but dispenses with having to move a target object.

Generally, the present disclosure also relates to measuring system 20 for controlling the function of a vehicle radar transceiver 3. The measuring system 20 comprises a radar system 2 that in turn comprises the radar transceiver 3 and a control unit 4, the measuring system 20 further comprising at least one target object 7.The measuring system 20 is adapted to: collect and store target data comprising a received detected signal level obtained from the reflected radar signals 6 that have been reflected by a target object 7 during a measurement angular interval 21; and to determine that the radar transceiver 3 is functioning properly when at least one of the following conditions is met:
- the detected signal level should exceed a minimum signal level 12 during an angular interval θᵢ comprised in the measurement angular interval 21;
- a detected signal level change for a certain angular change falls below a certain limit during an angular interval θᵢ comprised in the measurement angular interval 21.

According to some aspects, the measuring system 20 comprises a movable target object 7 that is movable along a measurement arc 10 at a distance L from the radar transceiver 3 during a measurement angular interval 21.

According to some aspects, the measuring system 20 comprises a wire 17 that is adapted to maintain the distance L.

According to some aspects, the measuring system 20 is adapted to monitor the azimuth angle θ of the target object 7 over time as the target object is moved around the measurement arc 10 and compare the monitored azimuth angle θ to an expected azimuth angle trajectory.

According to some aspects, the measuring system 20 comprises two or more target objects 7 in one or more corresponding fixed positions.

According to some aspects, the target object 7 is formed by a metal pipe or metal rod.

According to some aspects, the measuring system 20 comprises an external computer device 18 that is connected to the control unit 4, where the computer device 18 is adapted to perform an analysis for determining whether at least one of said following conditions is met.

## Claims

1. A method for controlling the function of a vehicle radar transceiver (3), where the method comprises:
transmitting (S100) a radar signal (5);
collecting and storing (S300) target data comprising a received detected signal level obtained from the reflected radar signals (6) that have been reflected by at least one target object (7) during a measurement angular interval (21);
determining (S400) that the radar transceiver (3) is functioning properly when at least one of the following conditions is met:
- the detected signal level exceeds a minimum signal level (12) during an angular interval (θᵢ) comprised in a measurement angular interval (21); and
- a detected signal level change for a certain angular change falls below a certain limit during an angular interval (θᵢ) comprised in the measurement angular interval (21).

2. The method according to claim 1, wherein the method comprises moving (S200) the target object (7) along a measurement arc (10) at a distance (L) from the radar transceiver (3) during the measurement angular interval (21).

3. The method according to claim 2, wherein a wire (17) is used for maintaining the distance (L).

4. The method according to any one of the claims 2 or 3, wherein the method comprises:
monitoring (S301) an azimuth angle (θ) of the target object (7) over time as the target object is moved around the measurement arc (10), and
comparing (S401) the monitored azimuth angle (θ) to an expected azimuth angle trajectory.

5. The method according to claim 1, wherein there are two or more target objects (7) in one or more corresponding fixed positions.

6. The method according to any one of the previous claims, wherein a metal pipe or metal rod is used as target object (7).

7. The method according to any one of the previous claims, wherein the target object (7) is cylindrical and vertically arranged on a wheeled carriage (16).

8. The method according to any one of the previous claims, wherein the minimum signal level (12) varies as a function of azimuth angle.

9. A measuring system (20) for controlling the function of a vehicle radar transceiver (3), the measuring system (20) comprising a radar system (2) that in turn comprises the radar transceiver (3) and a control unit (4), the measuring system (20) further comprising at least one target object (7), where the measuring system (20) is adapted to:
collect and store target data comprising a received detected signal level obtained from the reflected radar signals (6) that have been reflected by a target object (7) during a measurement angular interval (21); and to determine that the radar transceiver (3) is functioning properly when at least one of the following conditions is met:
- the detected signal level should exceed a minimum signal level (12) during an angular interval (θᵢ) comprised in the measurement angular interval (21);
- a detected signal level change for a certain angular change falls below a certain limit during an angular interval (θᵢ) comprised in the measurement angular interval (21).

10. The measuring system (20) according to claim 9, wherein the measuring system (20) comprises a movable target object (7) that is movable along a measurement arc (10) at a distance (L) from the radar transceiver (3) during a measurement angular interval (21).

11. The measuring system (20) according to claim 10, wherein the measuring system (20) comprises a wire (17) that is adapted to maintain the distance (L).

12. The measuring system (20) according to any one of the claims 10 or 11, wherein the measuring system (20) is adapted to monitor the azimuth angle (θ) of the target object (7) over time as the target object is moved around the measurement arc (10) and compare the monitored azimuth angle (θ) to an expected azimuth angle trajectory.

13. The measuring system (20) according to claim 9, wherein the measuring system (20) comprises two or more target objects (7) in one or more corresponding fixed positions.

14. The measuring system (20) according to any one of the claims 9-13, wherein the target object (7) is formed by a metal pipe or metal rod.

15. The measuring system (20) according to any one of the claims 9-14, wherein the measuring system (20) comprises an external computer device (18) that is connected to the control unit (4), where the computer device (18) is adapted to perform an analysis for determining whether at least one of said following conditions is met.
